# EUROPEAN PATENT APPLICATION

(11) **EP 4 769 664 A1**
(43) Date of publication of application: **01.07.2026**
(21) Application number: 24894596.6
(22) Date of filing: 20.11.2024
(51) Int. Cl.: H01M 10/6557, H01M 10/613, H01M 10/625

(54) **COOLING STRUCTURE OF BATTERY PACK, INCLUDING HEAT PIPE**

(30) Priority: 23.11.2023 KR 20230164674
(71) Applicant: LG ENERGY SOLUTION, LTD., Seoul 07335 (KR)
(72) Inventor: CHUN, Yongho, Yuseong-gu Daejeon 34122 (KR); KIM, Taewan, Yuseong-gu Daejeon 34122 (KR)
(74) Representative: BCKIP Part mbB
(86) International application number: PCT/KR2024/018372
(87) International publication number: WO 2025/110704

(57) **Abstract**

The present invention provides a structure of a battery pack including: a plurality of battery modules arranged in widthwise direction; a pack frame having a side wall and a bottom plate and accommodating the plurality of battery modules;
a heat pipe in contact with a lower outer surface of the plurality of battery modules and extending in lengthwise direction; and a cooling channel comprising: a coolant path where a coolant circulates, the coolant path being connected to one lengthwise end of the heat pipe; an inlet where the coolant enters; and an outlet where the coolant exits.

## Description

### [TECHNICAL FIELD]

This application claims the benefit of priority based on Korean Patent Application No. 10-2023-0164674 filed on November 23, 2023, entire content disclosed in the document of the patent applications is included as a part of this specification.

The present invention relates to a cooling structure including a heat pipe applicable to a battery pack in which a plurality of battery modules are built-in.

### [BACKGROUND ART]

Secondary batteries, which provides ease of application depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium to large-sized battery module in which multiple battery cells are electrically connected is used. Additionally, a plurality of such battery modules may be integrated to constitute a battery pack with higher output and larger capacity.

Meanwhile, the battery module may generate heat during the normal charge and discharge of the battery cell. Accordingly, it is common for the battery pack to be provided with a cooling structure to cool and dissipate such heat.

As such a cooling structure, a structure that cools the battery module by arranging a heat sink with high thermal conductivity on the bottom plate of the battery pack and cooling the heat sink by air cooling or water cooling is widely used. The heat sink may be disposed at the lower portion of each battery module, and also be arranged at the lower portion of the battery pack.

However, when a heat sink is provided for each battery module, a pipe through which coolant flows must be connected to each heat sink. This requires a complex assembly process, and coolant leakage from the vulnerable joint of the pipe may cause a short circuit.

In addition, the path of the coolant provided in the heat sink usually has a large cross-sectional area or is a long and complex zigzag path in order to cover the entire lower portion of the battery module as much as possible. This slows down the cooling speed and results in different degrees of cooling for each part.

In particular, the cooling may be less effective for the portion of the heat sink closer to the outlet in one heat sink, and for the heat sink closer to the outlet of the cooling channel of the entire battery pack among multiple heat sinks connected in series.

### [DISCLOSURE]

### [TECHNICAL PROBLEM]

In order to solve above-described problems of prior art, it is an object of the present invention to provide a structure of a battery pack with improved cooling efficiency.

Specifically, it is an object of the present invention to provide a structure of a battery pack having a cooling structure capable of uniformly cooling each part of a battery module and each module in one-way or two-way at a high cooling speed by including a heat pipe.

It is another object of the present invention to provide a structure of a battery pack capable of preventing accidents such as short circuits due to coolant leakage by not providing a joint between a cooling channel and a heat pipe in the pack frame.

It is yet another object of the present invention to provide a structure of a battery pack having improved energy density by an efficient cooling structure while suppressing a large volume increase.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve the above problems, the present invention provides a structure of a battery pack including: a plurality of battery modules arranged in widthwise direction; a pack frame having a side wall and a bottom plate and accommodating the plurality of battery modules; a heat pipe in contact with a lower outer surface of the plurality of battery modules and extending in lengthwise direction; and a cooling channel comprising: a coolant path where a coolant circulates, the coolant path being connected to one lengthwise end of the heat pipe; an inlet where the coolant enters; and an outlet where the coolant exits.

According to the present invention, a structure of a battery pack capable of preventing coolant leakage into the pack frame due to damage of a vulnerable joint of the cooling channel and a short circuit caused by the leakage may be provided as it is sufficient as long as the heat pipe and the cooling channel are in contact with each other without communicating with each other,.

In addition, according to the present invention, since the cooling channel is disposed at lengthwise ends of the battery module, the lower portion of the battery pack is not excessively thick by the cooling structure, thereby improving space utilization and energy density.

The one lengthwise end of the heat pipe may protrude in lengthwise direction with respect to one lengthwise end of the battery module. As a result, the coolant path may be in contact with the end portion of the heat pipe in heightwise direction as well as in lengthwise direction, and the area occupied by the cooling structure is reduced and space utilization may be improved as the heat pipe and the cooling channel overlap in heightwise direction.

One lengthwise end of the heat pipe may extend toward the side wall. Here, the coolant path may be provided along the inner surface of the side wall. The space efficiency may be improved as the coolant path is provided in the space between the battery module and the side wall.

Preferably, at least a portion of the coolant path may be embedded in the side wall. As a result, even when the battery module is disposed very close to the side wall, the coolant path may be provided without occupying a large space.

The battery modules may be arranged in a plurality of rows that are juxtaposed in lengthwise direction. Two rows of battery modules may be arranged according to an embodiment of the present invention.

Here, one lengthwise end of the heat pipe may extend to the space between the rows of the battery modules, and the coolant path may extend in widthwise direction in the space between the rows of the battery modules. Since the coolant path is disposed in the space between the rows of the battery modules, the coolant path does not occupy additional space.

Preferably, the pack frame may include a partition wall extending in widthwise direction in the space between rows of the battery modules and dividing the rows of the battery modules, and at least a portion of the coolant path may be embedded in the partition wall. Accordingly, the space in which the battery modules are arranged may be partitioned while the coolant path is provided without occupying additional space.

Preferably, the two lengthwise ends of the heat pipe protrude in lengthwise direction with respect to the two lengthwise ends of the plurality of battery modules, respectively.

For example, when one row of battery modules may be provided in a single row, the two lengthwise ends of the heat pipe may extend toward the side wall, and the coolant path may be provided along the inner surface of the side wall. Alternatively, at least a portion of the coolant path may be embedded in the side wall.

According to an embodiment of the present invention, the battery modules may be arranged in a plurality of rows that are juxtaposed in lengthwise direction, and each lengthwise end of the heat pipe may extend toward the space between rows of the battery modules or toward the side wall. Here, the coolant path may extend in widthwise direction in at least one of the space between the rows of the battery module and between the battery module and the side wall. Here, at least a portion of the coolant path may be embedded in at least one of the partition wall and the side wall.

The heat pipe may include an extension extending in lengthwise direction; and a protruding portion extending in upward direction from one lengthwise end or two lengthwise ends thereof. Accordingly, the heat absorbed by the heat pipe may be concentrated at the protruding portion provided at the one lengthwise end thereof, and the cooling efficiency of the heat pipe may be improved by connecting the protruding portion to the coolant path.

Here, since only the protruding portion connected to the coolant path is exposed to the outside, at least a portion of the extension may be embedded in the bottom plate to further reduce the thickness of the lower portion of the battery pack.

It is preferable that a plurality of heat pipes is provided for each battery module.

The battery module may include a plurality of battery cells extending in lengthwise direction and arranged in widthwise direction. Since both the battery module and the heat pipe extend in lengthwise direction, the heat pipe may quickly and uniformly cool the battery cells even when each battery cell constituting the battery module generates heat differently.

The inlet and the outlet protrude outward from one side of the pack frame. Accordingly, since the joint of the cooling channel is provided entirely outside the pack frame, the risk of coolant leaking within the pack frame may be reduced.

The present invention also provides a structure of a vehicle including the battery pack. The battery pack may be built into the vehicle as a power source. The vehicle may be an electric vehicle or a hybrid vehicle. The vehicle may be a two-wheeled vehicle or a four-wheeled vehicle. However, the structure of the vehicle is not limited thereto, and the battery pack does not necessarily have to serve as a power source of the vehicle.

### [ADVANTAGEOUS EFFECTS]

The present invention may provide a structure of a battery pack with improved cooling efficiency by including a heat pipe and a cooling channel connected thereto.

Specifically, the present invention may provide a structure of a battery pack having a cooling structure capable of uniformly cooling each part of a battery module and each module in one-way or two-way at a high cooling speed by including a heat pipe.

The present invention may also provide a structure of a battery pack capable of preventing accidents due to coolant leakage by not providing a joint between a cooling channel and a heat pipe in the pack frame.

The present invention also provides a structure of a battery pack having improved energy density by suppressing a large volume increase by a heat pipe and/or a cooling channel embedded in the pack frame.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIGS. 1 and 2 illustrate a structure of a battery module according to an embodiment of the present invention.
FIGS. 3 and 4 illustrate cross-sections of a battery module taken along widthwise directions according to an embodiment of the present invention.
FIGS. 5 and 6 illustrate cross-sections a battery module taken along lengthwise directions of according to an embodiment of the present invention.
FIG. 7 illustrates a battery pack according to an embodiment of the present invention.
FIGS. 8 and 9 illustrate a cooling structure and the cooling structure with battery modules disposed thereon, respectively, according to an embodiment of the present invention.
FIG. 10 illustrates a flow of coolant in the cooling structure of FIG. 9 viewed from above.
FIG. 11 illustrates the flow of heat in the cooling structure of FIG. 9 viewed from below.
FIGS. 12 and 13 illustrate cross-sections of a battery pack taken along widthwise direction according to an embodiment of the present invention.
FIGS. 14 and 15 illustrate cross-sections of a battery pack taken along lengthwise direction according to an embodiment of the present invention.
FIG. 16 illustrates a vehicle including a battery pack according to an embodiment of the present invention.

### [DESCRIPTION OF REFERENCE NUMERALS]

1: battery module
11: battery cell
12: pack frame
13: heat pipe
   130: extension
   131: protruding portion
2: pack frame
   20: bottom plate
   21: side wall
   22: partition wall
3: cooling channel
   30: coolant path
   31: inlet
   32: outlet
P: battery pack
V: vehicle

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

Hereinafter, preferred embodiments of the present invention will be described with reference to the accompanying drawings.

### [STRUCTURE OF BATTERY MODULE]

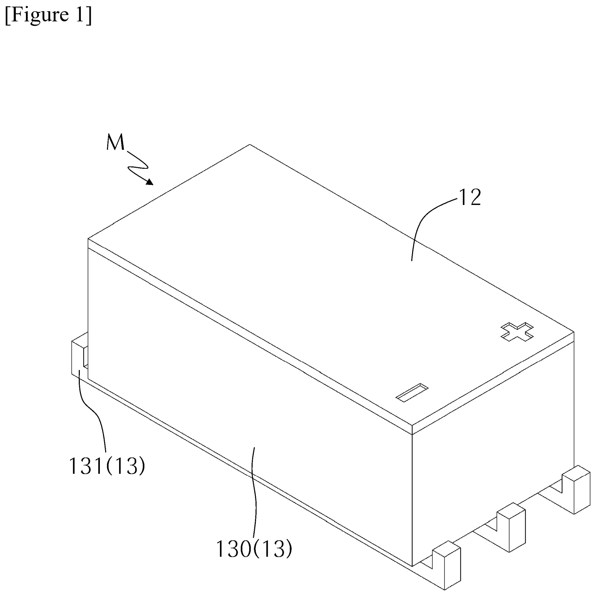

Hereinafter, with reference to FIGS. 1 to 6, structures of a battery module and a heat pipe according to an embodiment of the present invention will be described in detail.

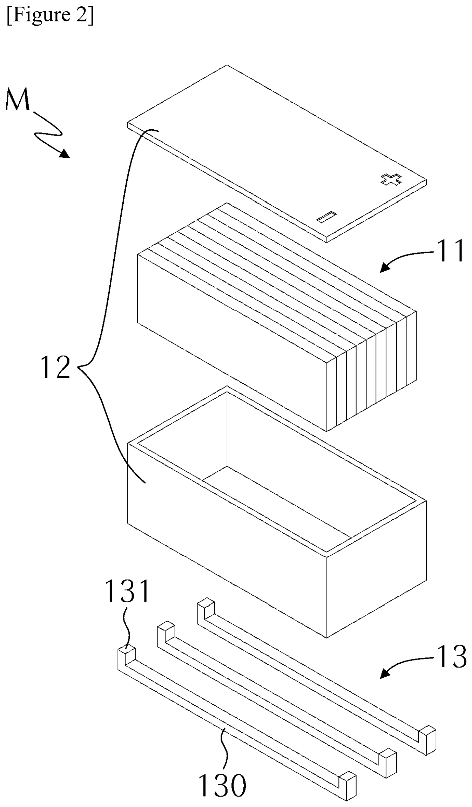

FIGS. 1 and 2 illustrate a structure of a battery module according to an embodiment of the present invention. Referring to FIGS. 1 and 2, a battery module 1 according to an embodiment of the present invention may include a battery cell 11 and a pack frame 12 accommodating the battery cell 11.

The battery cell 11 may be, but not limited to, a pouch-type battery cell.

The battery cell 11 may extend in lengthwise direction and a plurality of battery cells may be stacked in widthwise direction.

For heat dissipation, it is preferable that the battery cell 11 is in direct contact with the bottom surface of the pack frame 12 or in indirect contact with the bottom surface of the pack frame 12 via a heat-conducting material such as a thermally conductive resin and/or a thermally conductive sheet.

According to an embodiment of the present invention, the pack frame 12 may include a frame body with an open upper portion and a top plate covering the upper portion. However, the pack frame 12 may have any structure as long as a bottom surface and a lower outer surface are provided.

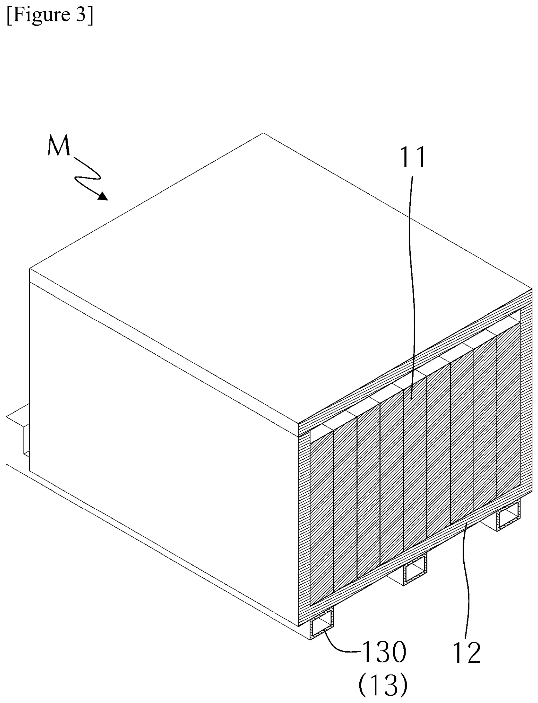

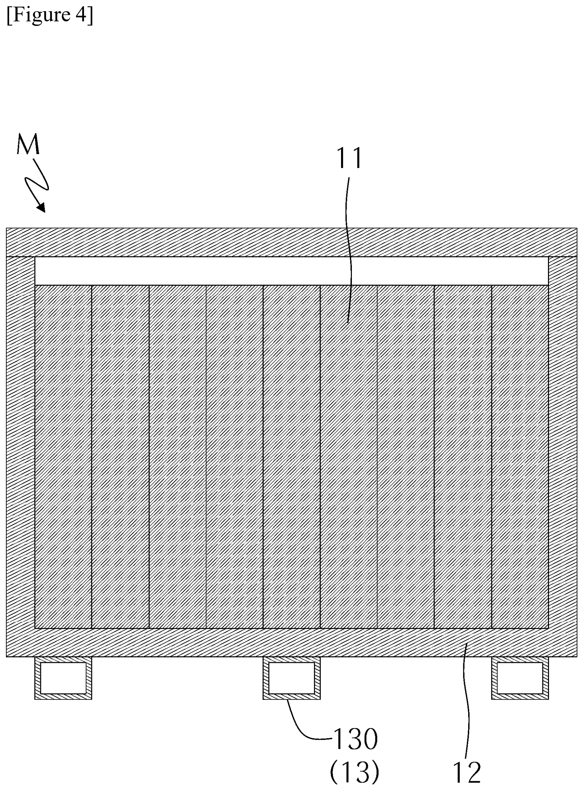

FIGS. 3 and 4 illustrate cross-sections of a battery module taken along widthwise directions according to an embodiment of the present invention. Referring to FIGS. 3 and 4, a heat pipe 13 extending in lengthwise direction may be in contact with the lower outer surface of the battery module 1.

The heat pipe 13 may be manufactured by creating a vacuum state in a metal pipe with a specially processed interior, inserting a small amount of coolant into the metal pipe, and sealing the metal pipe. The type of the coolant may be selected according to the temperature at which the heat pipe 13 is used, and generally, a coolant containing water may be selected.

A plurality of heat pipes 13 may be provided for each battery module 1. As a result, the heat pipe 13 may uniformly absorb heat from the entire lower portion of the battery module 1.

According to an embodiment of the present invention, the heat pipe 13 extends in lengthwise direction of the battery cell 11 such that some of the battery cells 11 that generates heat may be cooled without transmitting heat to other battery cells to uniformly cool all individual battery cells.

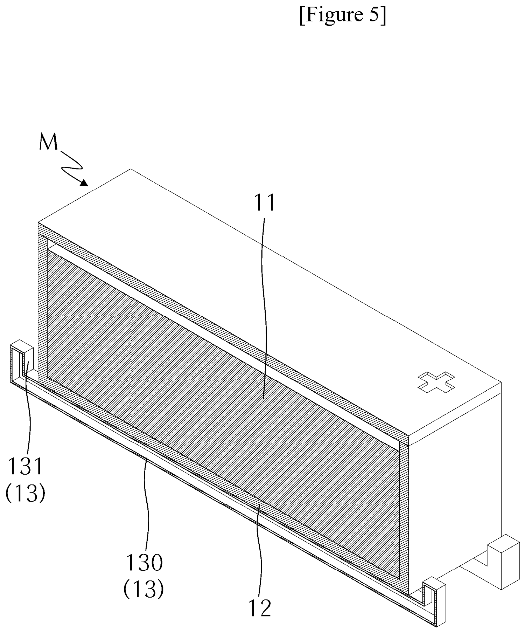

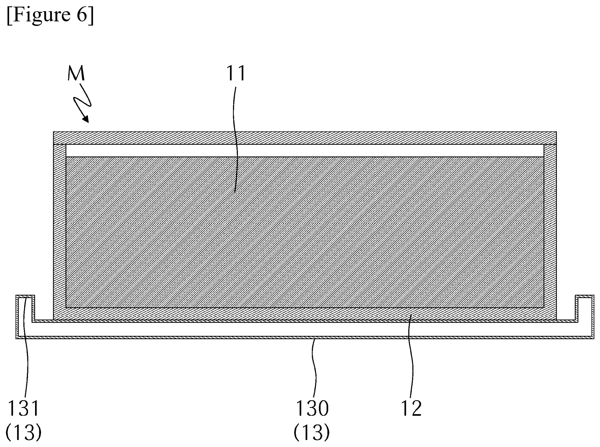

FIGS. 5 and 6 illustrate cross-sections a battery module taken along lengthwise directions of according to an embodiment of the present invention Referring to FIGS. 5 and 6, it is preferable that one lengthwise end or two one lengthwise ends of the heat pipe 13 protrudes with respect to the battery module 1.

Here, the heat pipe 13 may include an extension 130 extending in lengthwise direction; and a protruding portion 131 extending in upward direction from one lengthwise end or two lengthwise ends thereof. "Protruding portion 131 extending in upward direction" may include a structure extending obliquely with a small heightwise component as well as a structure extending perpendicularly.

According to an embodiment of the present invention, the extension 130 may be in contact with the lower outer surface of the battery module 1, and the protruding portion 131 may be provided at one lengthwise end or two lengthwise ends of the battery module 1.

As the protruding portion 131 is provided, the heat absorbed by the heat pipe 13 from the battery module 1 may be concentrated at the protruding portion 131. This may be due to phase change of the coolant and convection of the gas accommodated in the heat pipe 13, and thus, the entire lower portion of the battery module 1 may be cooled by cooling only the protruding portion 131.

According to an embodiment of the present invention, the protruding portion 131 may be provided at two one lengthwise ends of the battery module 1 and cooled, and thus, the battery module 1 may be cooled in two ways. However, the heat pipe 13 may be provided only at one lengthwise end of the battery module 1 such that only the one lengthwise end of the heat pipe 13 may be cooled only in one way.

### [GENERAL STRUCTURE OF BATTERY PACK]

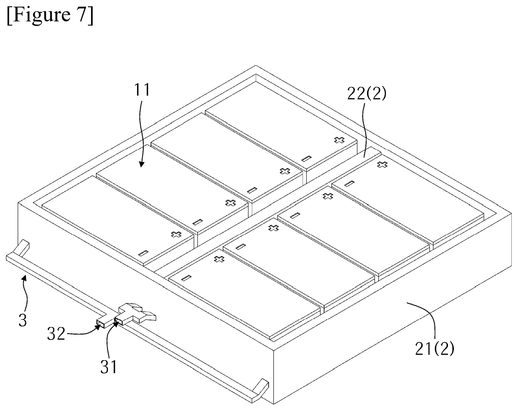

Hereinafter, with reference to FIG. 7, a general structure of a battery pack according to an embodiment of the present invention will be described in detail.

FIG. 7 illustrates a battery pack according to an embodiment of the present invention. Referring to FIG. 7, a battery pack P according to an embodiment of the present invention may include a battery module 1 and a pack frame 2 accommodating the battery module 1.

A plurality of battery modules 1 may be arranged in widthwise direction. In addition, rows of battery modules 1 may be juxtaposed in lengthwise direction in grid formation. According to an embodiment of the present invention, two rows of battery modules 1 may be juxtaposed in lengthwise direction in grid formation wherein a plurality of battery modules 1 are arranged in widthwise direction in each row.

The pack frame 2 may include a bottom plate 20 on which the battery module 1 is disposed and a side wall 21 forming an outer side surface of the pack frame 2. The pack frame 2 may also include a partition wall 22 extending in widthwise direction between the rows of battery modules 1 and dividing the rows of the battery modules 1.

### [COOLING STRUCTURE]

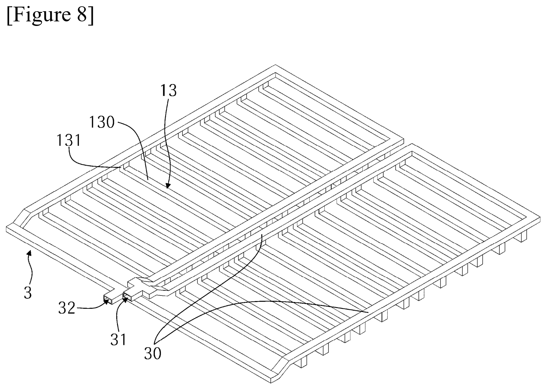

Hereinafter, with reference to FIGS. 8 to 11, a cooling structure of a battery pack and operation thereof according to an embodiment of the present invention will be described in detail.

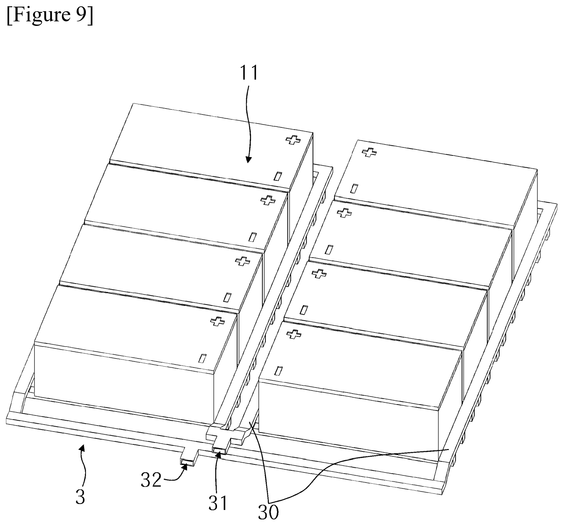

FIGS. 8 and 9 illustrate a cooling structure and the cooling structure with battery modules disposed thereon, respectively, according to an embodiment of the present invention. Referring to FIGS. 8 and 9, a battery pack P may include a cooling channel 3 through which coolant circulates. The cooling channel 3 may be tubular such that the coolant flows therein.

The cooling channel 3 may include a coolant path 30, an inlet 31 and an outlet 32.

The coolant path 30 may be connected to one lengthwise end or two lengthwise ends of the heat pipe 13 and may extend in widthwise direction. "Coolant path 30 connected to the heat pipe 13" may refer to a structure wherein the coolant path 30 is thermally in contact with the heat pipe 13 without being fastened to each other such that the heat from the heat pipe 13 may be conducted to the coolant path 30.

When one lengthwise end or two lengthwise ends of the heat pipe 13 protrudes with respect to the battery module 1, the coolant path 30 may be in contact with the end portion of the heat pipe 13 in heightwise direction as well as in lengthwise direction. As a result, the area occupied by the coolant path 30 is reduced such that the increase in the volume of the battery pack P due to the cooling channel 3 is minimized, and space utilization may be improved.

Here, when the heat pipe 13 is provided with the protruding portion 131, the coolant path 30 may be connected to the protruding portion 131 to effectively cool the heat pipe 13.

It is preferable that the inlet 31 and the outlet 32 where the coolant enters and exits the cooling channel 3, respectively, are located on outer surface of the pack frame 2. Here, the inlet 31 and the outlet 32 protrude outward in the same direction from one side of the pack frame 2, thereby facilitating the supply and recovery of the coolant.

The inlet 31 may be disposed higher than the outlet 32 to facilitate the flow of the coolant.

According to an embodiment of the present invention, since the heat pipe 13 provided for each of the battery modules 1 is not in communication with the cooling channel 3 but is only thermally connected by being in contact therewith, it is necessary to provide a joint between the cooling channel 3 and the heat pipe 13 inside the pack frame 2. As a result, the risk of coolant leaking out of the pack frame 2 and causing a short circuit, etc. is also prevented.

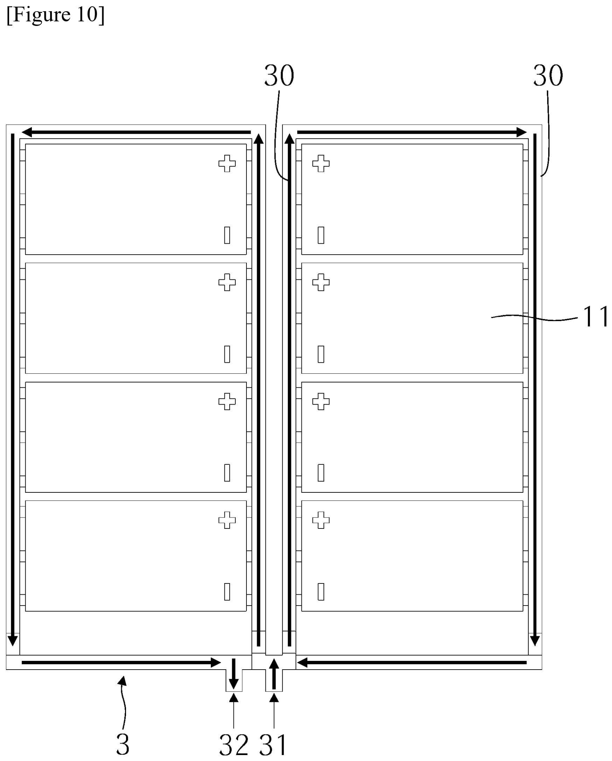

FIG. 10 illustrates a flow of coolant in the cooling structure of FIG. 9 viewed from above. Referring to FIG. 10, the coolant path 30 according to an embodiment of the present invention may extend in widthwise direction in the space between the two rows of the battery modules 1 and a space between the rows of the battery modules 1 and the side wall 21. Accordingly, the coolant introduced into the inlet 31 may cool the heat pipe 13 at the two lengthwise ends of the battery module 1.

According to an embodiment of the present invention, the cooling channel 3 is arranged symmetric to the two rows of the battery modules 1, and as the flow of coolant is also symmetric, each row of the battery modules 1 may be cooled uniformly.

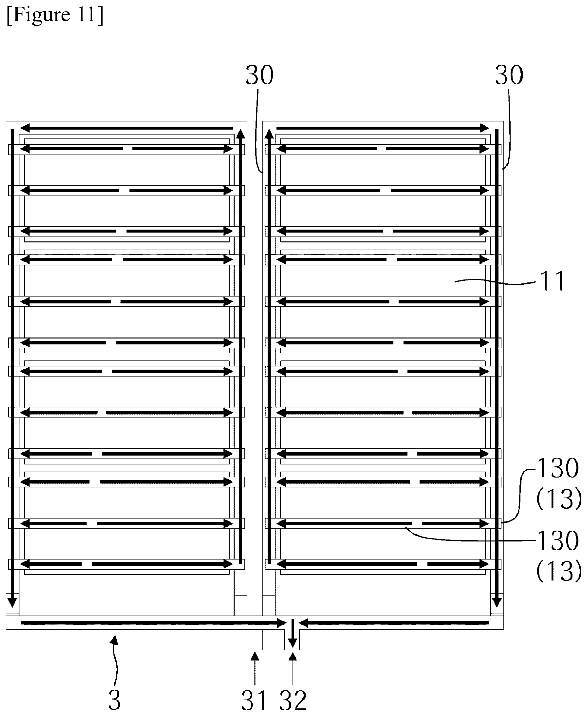

FIG. 11 illustrates the flow of heat in the cooling structure of FIG. 9 viewed from below. Referring to FIG. 11, the heat pipe 13 can absorb heat from the battery module 1, and the absorbed heat may be concentrated at the protruding portion 131. The coolant in the coolant path 30 may be absorb the heat concentrated at the protruding portion 131 and be released through the outlet 32. Here, the temperature of the coolant increases as the coolant travels from the inlet 31 to the outlet 32, and thus the cooling efficiency may be reduced. However, according to an embodiment of the present invention, the cooling channel 3 may uniformly cool each battery module 1 as one end of the heat pipe 13 is closer to the inlet 31 and the other end thereof is closer to the outlet 32.

### [EMBEDDED STRUCTURE OF COOLING CHANNEL]

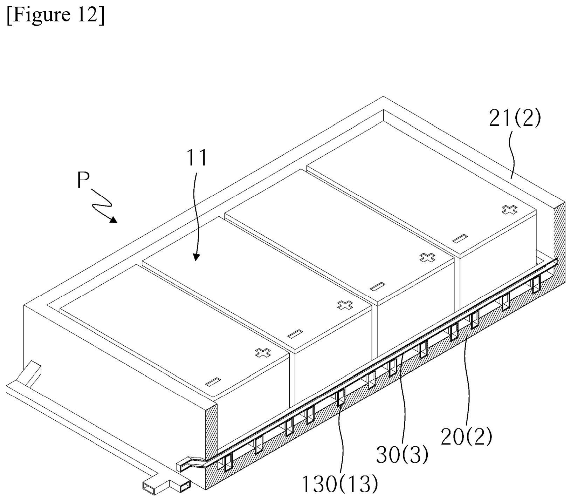

Hereinafter, with reference to FIGS. 12 to 15, embedded structures of the heat pipe and the cooling channel according to an embodiment of the present invention will be described in detail.

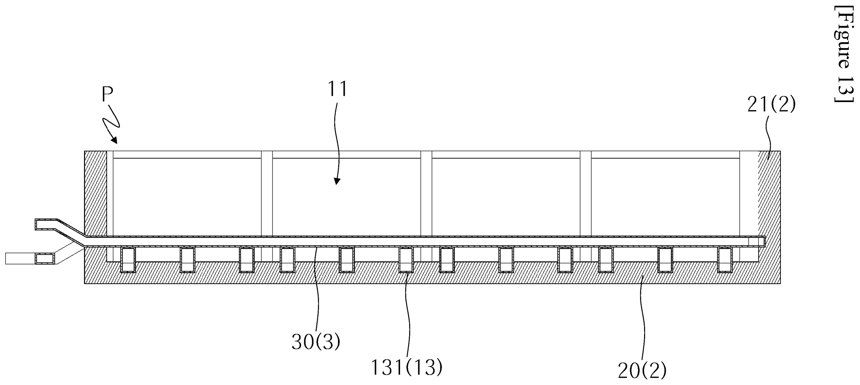

FIGS. 12 and 13 illustrate cross-sections of a battery pack taken along widthwise direction according to an embodiment of the present invention. Referring to FIGS. 12 and 13, at least a portion of the heat pipe 13 may be embedded in the bottom plate 20.

According to an embodiment of the present invention, a portion of the extension 130 may be embedded in the bottom plate 20. Here, the protruding portion 131 may protrude in upward direction with respect to the bottom plate 20 and be in contact with the coolant path 30. Such embedded structure reduces the overall height of the battery pack P, thereby improving space utilization and energy density.

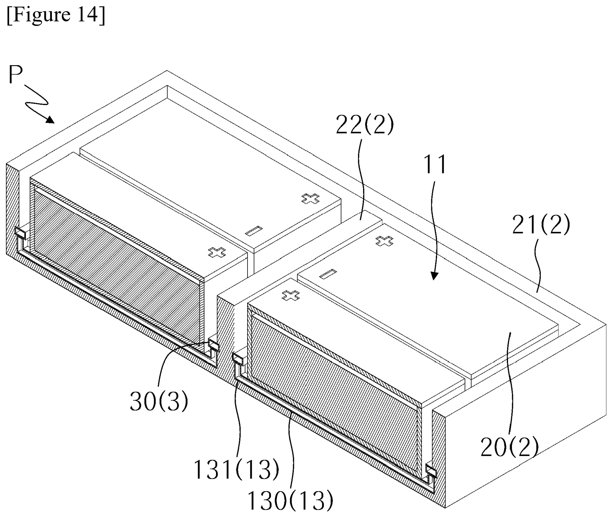

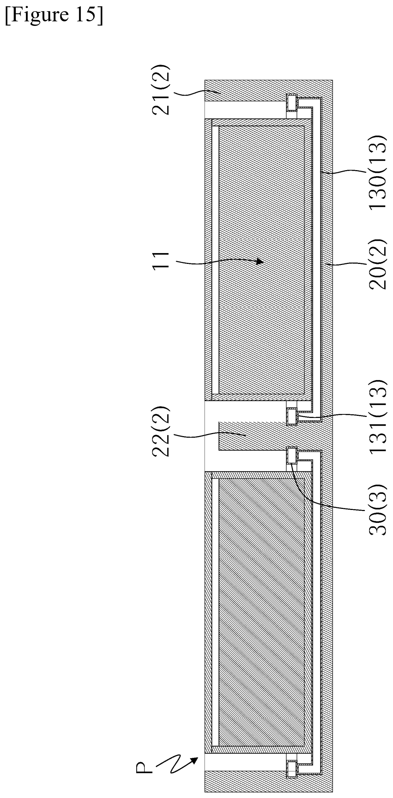

FIGS. 14 and 15 illustrate cross-sections of a battery pack taken along lengthwise direction according to an embodiment of the present invention. Referring to FIGS. 14 and 15, the coolant path 30 may extend in widthwise direction at least in one of the space between the rows of the battery modules 1 and the space between the rows of the battery modules 1 and the side wall 21.

Since the coolant path 30 is provided on the horizontal side of the battery module 1 rather than below the battery module 1, an increase in the height of the battery pack P due to the coolant path 30 is prevented. Here, the coolant path 30 may not occupy additional space by being accommodated in the space between the rows of the battery modules 1 and/or between the battery module 1 and the side wall 21.

Preferably, at least a portion of the coolant path 30 may be embedded in the side wall 21. Accordingly, the volume occupied by the coolant path 30 may be further reduced, and the energy density of the battery pack P may be further improved.

### [VEHICLE INCLUDING BATTERY PACK]

The present invention also provides a structure of a vehicle including the battery pack P.

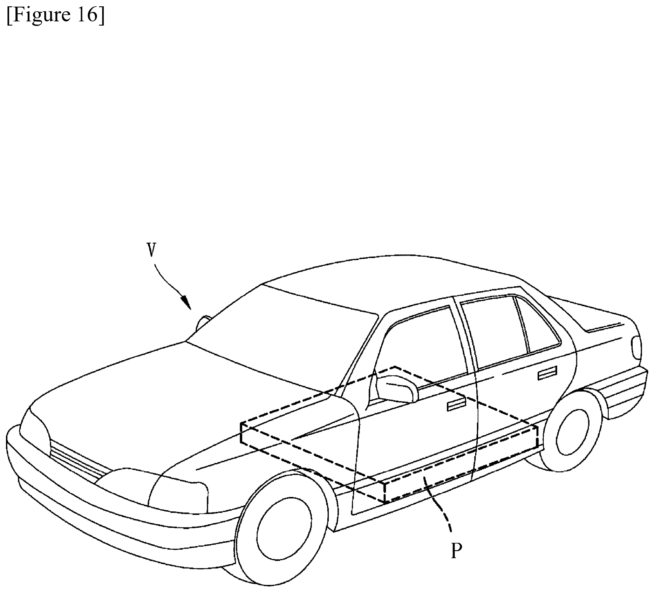

Hereinafter, with reference to FIG. 16, a structure of a vehicle including a battery pack according to an embodiment of the present invention will be described.

FIG. 16 illustrates a vehicle including a battery pack according to an embodiment of the present invention. Referring to FIG. 16, the battery pack P may be built into a vehicle V as a power source. The vehicle V may be a hybrid vehicle or an electric vehicle, but is not limited thereto. In addition, the vehicle V may be a two-wheeled vehicle or a four-wheeled vehicle, but is not limited thereto.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery pack comprising:
a plurality of battery modules arranged in widthwise direction;
a pack frame having a side wall and a bottom plate and accommodating the plurality of battery modules;
a heat pipe in contact with a lower outer surface of the plurality of battery modules and extending in lengthwise direction; and
a cooling channel comprising: a coolant path where a coolant circulates, the coolant path being connected to one lengthwise end of the heat pipe; an inlet where the coolant enters; and an outlet where the coolant exits,
wherein at least a portion of at least one of the heat pipe and the coolant path is embedded in the pack frame.

2. The battery pack of claim 1, wherein one lengthwise end of the heat pipe protrudes in lengthwise direction with respect to one lengthwise end of the plurality of battery modules.

3. The battery pack of claim 2, wherein the one lengthwise end of the heat pipe extends toward the side wall, and
the coolant path is provided along an inner surface of the side wall.

4. The battery pack of claim 3, wherein at least a portion of the coolant path is embedded in the side wall.

5. The battery pack of claim 2, wherein rows of battery modules are juxtaposed in lengthwise direction,
the one lengthwise end of the heat pipe extends to a space between the rows of the battery modules, and
the coolant path extends in widthwise direction in the space between the rows of the battery modules.

6. The battery pack of claim 5, wherein the pack frame comprises a partition wall extending in widthwise direction in the space between the rows of the battery modules to divide the rows of the battery modules, and
at least a portion of the coolant path is embedded in the partition wall.

7. The battery pack of claim 1, wherein two lengthwise ends of the heat pipe protrude in lengthwise direction with respect to two lengthwise ends of the plurality of battery modules, respectively.

8. The battery pack of claim 2, wherein two lengthwise ends of the heat pipe extend toward the side wall, and
the coolant path is provided along an inner surface of the side wall.

9. The battery pack of claim 8, wherein at least a portion of the coolant path is embedded in the side wall.

10. The battery pack of claim 7, wherein rows of battery modules are juxtaposed in lengthwise direction,
the two lengthwise ends of the heat pipe extend to a space between the rows of the plurality of battery modules and a space between the side wall, respectively, and
the coolant path extends in widthwise direction at least in one of the space between the rows of the battery modules and a space between the rows of the battery modules and the side wall.

11. The battery pack of claim 10, wherein the pack frame comprises a partition wall extending in widthwise direction in the space between the rows of the battery modules to divide the rows of the battery modules, and
at least a portion of the coolant path is embedded in at least one of the partition wall and the side wall.

12. The battery pack of claim 1, wherein the heat pipe comprises: an extension extending in lengthwise direction; and a protruding portion extending in upward direction from one lengthwise end or two lengthwise ends thereof.

13. The battery pack of claim 12, wherein at least a portion of the extension is embedded in the bottom plate.

14. The battery pack of claim 1, wherein a plurality of heat pipes is provided for each battery module.

15. The battery pack of claim 1, wherein the battery module comprises a plurality of battery cells extending in lengthwise direction and arranged in widthwise direction.

16. The battery pack of claim 1, wherein the inlet and the outlet protrude outward from one side of the pack frame.

17. A vehicle comprising a battery pack of any one of claims 1 to 16.
